# EUROPÄISCHE PATENTANMELDUNG

(11) **EP 4 510 330 A1**
(43) Veröffentlichungstag der Anmeldung: **19.02.2025**
(21) Anmeldenummer: 24182451.5
(22) Anmeldetag: 16.06.2024
(51) Int. Cl.: H01M 50/207, H01M 50/209, H01M 50/238, H01M 50/242, H01M 50/249, H01M 50/291

(54) **BATTERIESYSTEM**

(30) Priorität: 02.08.2023 DE 102023207400
(71) Anmelder: VOLKSWAGEN AG, 38440 Wolfsburg (DE)
(72) Erfinder: Zorn, Christoph, 38162 Cremlingen (DE); Helmholz, Ralf, 29413 Diesdorf (DE); Wolf, Michael, 38440 Wolfsburg (DE); Janßen, Werner, 38110 Braunschweig (DE); Hagen, Stefan, 38479 Tappenbeck (DE)

(57) **Zusammenfassung**

Die Erfindung betrifft Batteriesystem mit einem Zellstack (17), und einem ersten Längsträger (5), wobei der Zellstack (17) mit dem ersten Längsträger (5) verbunden ist. Erfindungsgemäß weist das Batteriesystem (1) eine erste Aufhängungseinheit (33) auf, über die der Zellstack (17) mit dem ersten Längsträger (5) verbunden ist und die dazu geeignet ist und/oder dazu ausgebildet ist, sich bei einem Seitencrash und/oder unter Einwirkung einer Crashkraft (F) parallel zu einer Querachse (Q) des Batteriesystems (1) definiert zu verformen.

## Beschreibung

Die Erfindung betrifft ein Batteriesystem nach dem Oberbegriff des Anspruches 1.

Ein gattungsgemäßes Batteriesystem weist ein Batteriegehäuse mit mehreren Längsträgern und zwei Querträgern auf. Das Batteriegehäuse begrenzt mehreren Zellstack-Aufnahmekammern, in denen jeweils ein Zellstack aus mehreren hintereinander gestapelten Batteriezellen angeordnet ist. Die Zellstacks sind über Klebverbindungen in das Batteriegehäuse eingeklebt. Bei einem Seitencrash versagen diese Klebverbindungen, so dass sich in Kombination mit dem Ausweichen der Längsträger Deformationsräume bilden, in die sich die Batteriezellen beim Seitencrash zum Crashenergieabbau hinein bewegen können.

Das Batteriesystem hat jedoch den Nachteil, dass beim Versagen der Klebverbindungen die Batteriezellen Schaden nehmen, und dass das tatsächliche Crashverhalten bzw. die Funktionserfüllung von den Versagenseigenschaften der Klebverbindungen abhängt und die Bewegung der Zellstacks nach dem Versagen der Klebverbindungen undefiniert ist. Auch kann sich durch eine ungünstige Versagensabfolge beim Seitencrash eine für die Crashsicherheit nachteilige Kinematik der Zellstacks einstellen.

Aus der DE 10 2019 102 226 A1 ist ein Batterieträger für ein Elektrokraftfahrzeug bekannt. Der Batterieträger weist eine Batteriewanne zur Aufnahme von Batteriemodulen auf, in der ein Längsträger angeordnet ist und optional die Batteriemodule an dem Längsträger befestigt sind. Der Längsträger bildet im Querschnitt ein geschlossenes Hohlprofil und weist eine Solldeformationsstelle auf, und zwar dergestalt, dass sich bei einem Seitencrash des Elektrokraftfahrzeuges der Längsträger im Querschnitt deformiert. Alternativ ist der Querträger aus einem Kunststoffwerkstoff gebildet und weist bevorzugt eine Verstärkung auf.

Eine Aufgabe der Erfindung besteht darin, ein Batteriesystem bereitzustellen, das bei einem Seitencrash ein vordefiniertes Deformationsverhalten zeigt und bei dem sich bei einem Seitencrash eine vorteilhafte Kinematik der Zellstacks einstellt.

Diese Aufgabe ist durch die Merkmale der unabhängigen Ansprüche gelöst. Bevorzugte Weiterbildungen der Erfindung sind in den Unteransprüchen offenbart.

Erfindungsgemäß vorgeschlagen ist ein Batteriesystem mit einem Zellstack, und einem ersten Längsträger, wobei der Zellstack mit dem ersten Längsträger verbunden ist. Erfindungsgemäß weist das Batteriesystem eine erste Aufhängungseinheit auf, über die der Zellstack mit dem ersten Längsträger verbunden ist und die dazu geeignet ist und/oder dazu ausgebildet ist, sich bei einem Seitencrash und/oder unter Einwirkung einer Crashkraft parallel und/oder entlang, und vorzugsweise ausschließlich, zu einer Querachse des Batteriesystems definiert zu verformen. Somit weist das Batteriesystem oder der Zellstack eine vordefiniertes Deformationsverhalten auf, und zwar ohne dass beim Seitencrash eine Klebverbindung zerstört werden müsste, was zu einem undefinierten Deformationsverhalten des Batteriesystems oder des Zellstacks führen würde. Der Zellstack weist beim Seitencrash somit eine vorteilhafte Kinematik auf.

Bei einer beispielhaften Ausführungsform kann vorgesehen sein, dass die erste Aufhängungseinheit dazu geeignet ist und/oder dazu ausgebildet ist, sich bei dem Seitencrash und unter Einwirkung der Crashkraft derart zu verformen, dass sich der Zellstack, vorzugsweise ausschließlich oder im Wesentlichen, entlang oder parallel zu der Querachse relativ zu und in Richtung des ersten Längsträgers verschiebt. Der Zellstack verschiebt sich somit idealerweise ausschließlich parallel zu der Querachse des Batteriesystems und damit definiert in der Querrichtung des Batteriesystems.

Bei einer exemplarischen Ausführungsform kann vorgesehen sein, dass die erste Aufhängungseinheit dazu geeignet ist und/oder dazu ausgebildet ist, sich bei dem Seitencrash und unter Einwirkung der Crashkraft derart zu verformen, dass der Zellstack seine Position und Lage, relativ zum ersten Längsträger, in einer, vorzugsweise positiven oder negativen, Längsachsenrichtung des Batteriesystems, vorzugsweise vollständig, beibehält, und/oder dass der Zellstack seine Position und Lage, relativ zum ersten Längsträger, in einer, vorzugsweise positiven oder negativen, Hochachsenrichtung des Batteriesystems, vorzugsweise vollständig oder im Wesentlichen, beibehält. Eine Verschiebung des Zellstacks bzw. der Batteriezellen in Längs- oder Hochrichtung des Batteriesystems ist somit gezielt und in vorteilhafter Weise unterbunden.

Bei einer bevorzugten Ausführungsform kann vorgesehen sein, dass die erste Aufhängungseinheit einen ersten Solldeformationsbereich und/oder einen zweiten Solldeformationsbereich aufweist, und dass die erste Aufhängungseinheit dazu geeignet ist und/oder dazu ausgebildet ist, dass sich die erste Aufhängungseinheit unter der Einwirkung der Crashkraft, vorzugsweise ausschließlich oder im Wesentlichen, im Bereich des ersten Solldeformationsbereiches, bevorzugt plastisch, verformt, und/oder dass sich die erste Aufhängungseinheit unter der Einwirkung der Crashkraft, vorzugsweise ausschließlich oder im Wesentlichen, im Bereich des zweiten Solldeformationsbereiches, bevorzugt plastisch, verformt. Die Aufhängungseinheit ist also in vorteilhafter Weise so gestaltet, dass eine Verformung nur in vordefinierten Bereichen erfolgt. Die Auslegung und Dimensionierung und Anpassung der Aufhängungseinheit an unterschiedliche Fahrzeugtypen und Crashsituation ist daher einfach umsetzbar, da in erster Linie nur die Solldeformationsbereiche angepasst werden müssen.

Bei einer besonders bevorzugten Ausführungsform kann vorgesehen sein, dass die Aufhängungseinheit einen zellstackseitigen Schenkel und einen trägerseitigen Schenkel aufweist, wobei bevorzugt vorgesehen sein kann, dass der erste Solldeformationsbereich durch einen Anbindungsbereich gebildet ist, an dem der zellstackseitige Schenkel in den trägerseitigen Schenkel übergeht und/oder an diesem angebunden ist, und/oder dass der zweite Solldeformationsbereich der ersten Aufhängungseinheit durch einen Anbindungsbereich gebildet ist, an dem der trägerseitige Schenkel in den ersten Längsträger übergeht und/oder an diesem angebunden ist. Diese Anordnung der Solldeformationsbereiche führt in zuverlässiger Weise zu dem gewünschten Deformationsverhalten.

Bei einer beispielhaften Ausführungsform kann vorgesehen sein, dass sich der zellstackseitige Schenkel in einer zellstackseitigen Schenkelebene erstreckt, die parallel zu einer Horizontalebene verläuft, die von der Querachse des Batteriesystems und einer Längsachse des Batteriesystems aufgespannt wird, und/oder dass sich der trägerseitige Schenkel ausgehend von dem zellstackseitigen Schenkel in, vorzugsweise positiver, Hochachsenrichtung und in Richtung des ersten Längsträgers schräg bis zum ersten Längsträger erstreckt. Speziell diese Konstruktion der Aufhängungseinheit zeigt das gewünschte Deformationsverhalten besonders zuverlässig.

Bei einer exemplarischen Ausführungsform kann vorgesehen sein, dass der zellstackseitigen Schenkel und der trägerseitigen Schenkel materialeinheitlich und/oder einstückig miteinander verbunden sind, und/oder dass der trägerseitige Schenkel zumindest teilweise durch den ersten Längsträger gebildet ist, und/oder dass der erste Solldeformationsbereich durch den trägerseitigen Schenkel gebildet ist. Auf diese Weise sind die Aufhängungseinheit und das Batteriesystem besonders kostengünstig herstellbar.

Bei einer beispielhaften Ausführungsform kann vorgesehen sein, dass der Zellstack in Klebverbindung mit der ersten Aufhängungseinheit, vorzugsweise mit einem zellstackseitigen Schenkel der ersten Aufhängungseinheit steht, wobei bevorzugt vorgesehen sein kann, dass die erste Aufhängungseinheit und die Klebverbindung derart dimensioniert und/oder ausgelegt sind, dass die Klebverbindung bei einer Verformung der ersten Aufhängungseinheit, vorzugsweise vollständig, intakt bleibt. Abweichungen vom definierten Deformationsverhalten treten bei dem Batteriesystem daher nicht auf, da die Klebverbindung nicht zerstört wird, sondern erhalten bleibt und das definierte Deformationsverhalten allein durch die Aufhängungseinheit bestimmt wird. Die Klebverbindung kann bei dem Batteriesystem daher mit einer sehr hohen Festigkeit gestaltet sein, ohne dass das definierte Deformationsverhalten beeinträchtigt werden würde.

Bei einer exemplarischen Ausführungsform kann vorgesehen sein, dass das Batteriesystem eine zweite Aufhängungseinheit aufweist, mittels der der Zellstack mit einem zweiten Längsträger des Batteriesystems verbunden ist, wobei bevorzugt vorgesehen sein kann, dass die zweite Aufhängungseinheit bau- und funktionsgleich mit der ersten Aufhängungseinheit ist.

Erfindungsgemäß vorgeschlagen ist außerdem ein Fahrzeug mit einem wie vorbeschriebenen Batteriesystem.

Nicht nur aber insbesondere zur Klarstellung sind die nachfolgenden Aspekte genannt:
Exemplarisch kann vorgesehen sein, dass die Crashkraft durch einen Kraftvektor gebildet ist, der sich parallel zu der Querachse des Batteriesystems erstreckt.

Bevorzugt kann vorgesehen sein, dass sich die Längsrichtung auf eine Längsachse des Batteriesystems und sich die Querrichtung auf eine Querachse des Batteriesystems und sich die Hochrichtung auf eine Hochachse des Batteriesystems bezieht. Alternativ oder zusätzlich kann vorgesehen sein, dass sich die Längsachse sowohl zu der Querachse als auch zu der Hochachse orthogonal erstreckt, und/oder dass sich die Querachse sowohl zu der Längsachse als auch zu der Hochachse orthogonal erstreckt.

Bevorzugt kann vorgesehen sein, dass sich der Zellstack derart parallel zu der Querrichtung relativ zu und in Richtung des ersten Längsprofils verschiebt, dass ein Montagefreigangspalt, der in einem unverformten Zustand der ersten Aufhängungseinheit vorgesehen ist, vollständig oder teilweise aufgebraucht wird.

An dieser Stelle wird darauf hingewiesen, dass die beschriebenen Längsträger aller Batteriesysteme durch ein Strangpress- oder Hohlprofil gebildet sein können, welches ein oder zwei Profilkammern aufweist.

Nachfolgend sind Ausführungsformen der Erfindung anhand der beigefügten Figuren beschrieben.

Es zeigt:
- Figur 1: in einer perspektivischen Ansicht mehrere hintereinander gestapelte Batteriezellen;
- Figur 2: in einer perspektivischen Ansicht einen Zellstack;
- Figur 3: in einer Ansicht von oben ein Batteriesystem vor einem Seitencrash;
- Figur 4: in einer Ansicht von oben das Batteriesystem nach dem Seitencrash;
- Figur 5: in einer Schnittansicht gemäß dem Schnittverlauf A-A das Batteriesystem vor dem Seitencrash;
- Figur 6: in einer Schnittansicht ausschnittsweise das Batteriesystem vor dem Seitencrash;
- Figur 7: in einer Schnittansicht ausschnittsweise das Batteriesystem nach dem Seitencrash, und
- Figuren 8 bis 11: in jeweils einer rein schematischen Schnittansicht weitere Ausführungsformen des Batteriesystems.

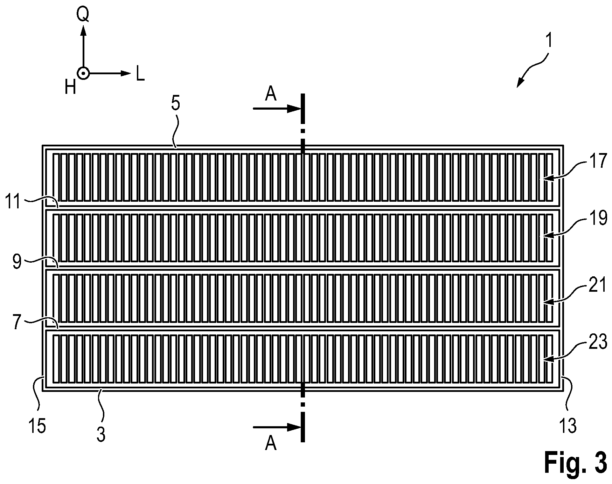

In der Figur 3 ist in einer Ansicht von oben ein in einem Fahrzeug (nicht dargestellt) montiertes Batteriesystem 1 gezeigt. Das Batteriesystem 1 weist einen Rahmen auf. Der Rahmen weist, hier lediglich beispielhaft, zwei außen angeordnete Längsträger 3 und 5, drei innen angeordnete Längsträger 7, 9 und 11 sowie zwei Querträger 13 und 15 auf.

Außerdem weist das Batteriesystem 1 vier Zellstack-Aufnahmekammern sowie vier Zellstacks 17, 19, 21, 23 auf. Die Längsträger 3, 5, 7, 9 und 11 sind an ihren jeweils ersten Enden über das Querprofil 13 und an ihren jeweils zweiten Enden über das Querprofil 15 miteinander verbunden. Jeweils zwei der Längsträger 3, 5, 7, 9 und 11 schließen zusammen mit den Querträgern 11 und 13 eine der vier Zellstack-Aufnahmekammern ein.

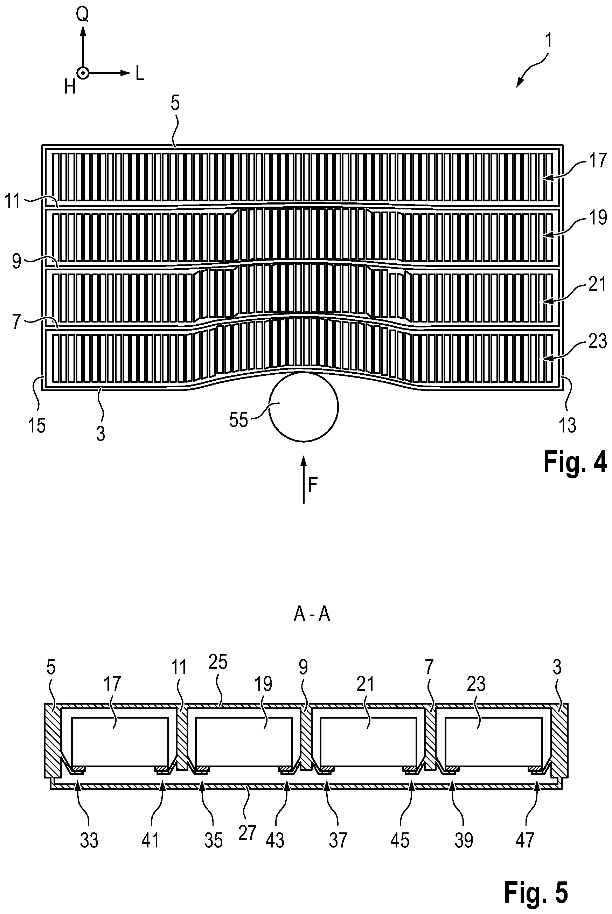

Wie dies in der Figur 5 dargestellt ist, weist das Batteriesystem 1 einen Deckel 25 und einen Boden 27 auf. Der Deckel 25 ist an allen Längsträgern 3, 5, 7, 9 und 11 angebunden. Der Boden 27 ist, hier lediglich beispielhaft, nur unmittelbar an den beiden außen angeordnete Längsträgern 3 und 5, jedoch nicht unmittelbar an den drei innen angeordneten Längsträgern 7, 9 und 11 angebunden.

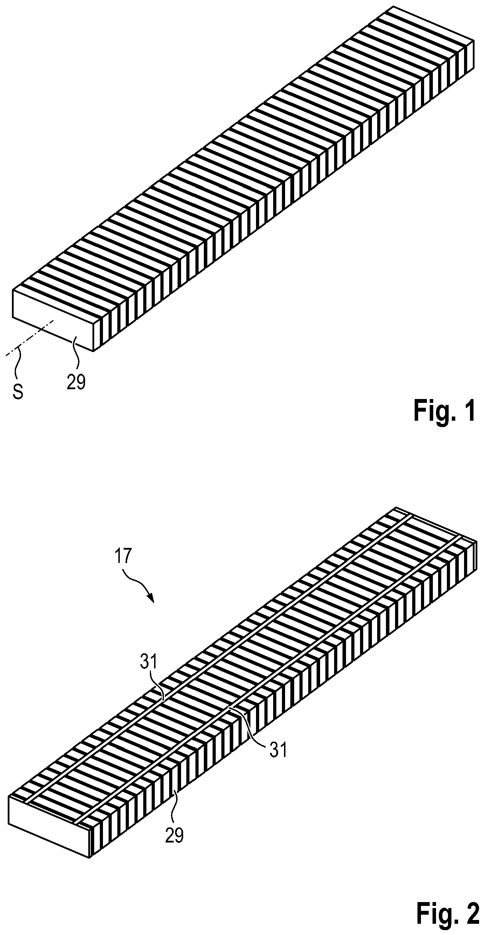

In jeder der Zellstack-Aufnahmekammern ist je einer der Zellstacks 17, 19, 21 und 23 angeordnet. Wie dies in der Figur 1 anhand des Zellstacks 17 dargestellt ist, weist jeder der Zellstacks 17, 19, 21 und 23 mehrere Batteriezellen 29 auf, die entlang einer Stapelachse S (siehe bspw. Figur 1) hintereinander gestapelt sind. Wie dies in der Figur 2 anhand des Zellstacks 17 dargestellt ist, weist jeder der Zellstacks 17, 19, 21 und 23 zwei Endplatten auf, die über zwei Spannbänder 31 unter Zwischenlage der Batteriezellen 29 derart miteinander verspannt sind, dass die Batteriezellen 29 gegeneinander gepresst werden.

Jeder der Zellstacks 17, 19, 21 und 23 ist so in dem ihm zugeordneten Zellstack-Aufnahmeraum angeordnet, dass sich die Stapelachse S parallel zu einer Längsachse L des Batteriesystems 1 erstreckt. Die Parallelität der Stapelachsen S mit der Längsachse L ist in der Figur 3 gezeigt. Wie dies ebenfalls in der Figur 3 gezeigt ist, sind dem Batteriesystem 1 zusätzlich eine Querachse Q und eine Hochachse H zugeordnet. Die Längsachse L erstreckt sich orthogonal zu der Querachse Q und der Hochachse H. Die Querachse Q erstreckt sich orthogonal zu der Hochachse H.

Das Batteriesystem 1 weist zusätzlich, hier lediglich beispielhaft und in Figur 5 dargestellt, vier erste Aufhängungseinheiten 33, 35, 37 und 39 sowie vier zweite Aufhängungseinheiten 41, 43, 45 und 47 auf. Wie dies in der Figur 5 dargestellt ist, ist der Zellstack 17 über die erste Aufhängungseinheit 33 mit dem Längsträger 5 und über die zweite Aufhängungseinheit 41 mit dem Längsträger 11 verbunden. Der Zellstack 19 ist über die erste Aufhängungseinheit 35 mit dem Längsträger 11 und über die zweite Aufhängungseinheit 43 mit dem Längsträger 9 verbunden. Der Zellstack 21 ist über die erste Aufhängungseinheit 37 mit dem Längsträger 9 und über die zweite Aufhängungseinheit 45 mit dem Längsträger 7 verbunden. Der Zellstack 23 ist über die erste Aufhängungseinheit 39 mit dem Längsträger 7 und über die zweite Aufhängungseinheit 47 mit dem Längsträger 3 verbunden.

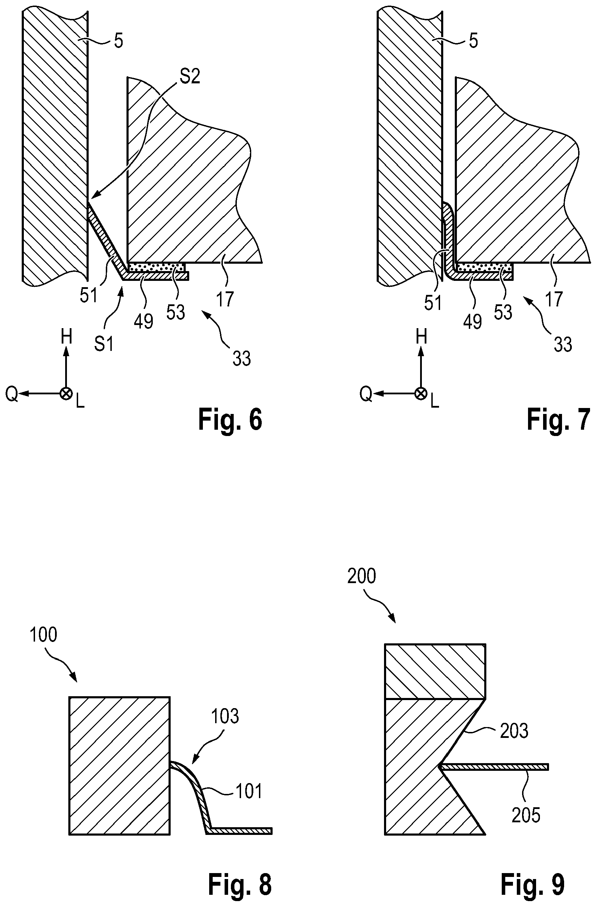

Der Aufbau und die Funktion aller Aufhängungseinheiten 33, 35, 37, 39, 41, 43, 45 und 47 des Batteriesystems 1 ist nachfolgend anhand der Aufhängungseinheit 33 detailliert und beispielhaft beschrieben. In der Figur 6 ist die Aufhängungseinheit 33 im unverformten Zustand dargestellt, das heißt zeitlich vor einem Seitencrash. In der Figur 7 ist die Aufhängungseinheit 33 im verformten Zustand dargestellt, das heißt nach dem Seitencrash.

Die Aufhängungseinheit 33 weist einen zellstackseitigen Schenkel 49 und einen trägerseitigen Schenkel 51 auf, die, hier lediglich beispielhaft, einstückig und materialeinheitlich miteinander verbunden sind. Der Zellstack 17 steht in Klebverbindung mit dem zellstackseitigen Schenkel 49, wobei die Klebverbindung dadurch gebildet ist, dass der Zellstack 17 unter Zwischenlage einer Klebstoffschicht 53 auf dem zellstackseitigen Schenkel 49 abgestützt und mit diesem verklebt ist. Der zellstackseitige Schenkel 49 erstreckt sich in einer zellstackseitigen Schenkelebene, die sich sowohl im unverformten Zustand der Aufhängungseinheit 33 als auch im verformten Zustand der Aufhängungseinheit 33 parallel zu der von der Querachse Q und der Längsachse L aufgespannten Horizontalebene erstreckt.

Der trägerseitige Schenkel 51 erstreckt sich, im unverformten Zustand der Aufhängungseinheit 33, ausgehend von dem zellstackseitigen Schenkel 49 entlang der Hochachse H in positiver Hochachsenrichtung und in Richtung des Längsträgers 5 schräg nach oben bis zum Längsträger 5. Der trägerseitige Schenkel 51 erstreckt sich in einer trägerseitigen Schenkelebene, die sich, im unverformten Zustand der Aufhängungseinheit 33, parallel zur Längsachse L erstreckt und die, im unverformten Zustand der Aufhängungseinheit 33, mit der zellstackseitigen Schenkelebene einen Winkel einschließt, der lediglich beispielhaft einen Betrag in einem Bereich zwischen 35° und 55° aufweisen kann. Mittels der Aufhängungseinheit 33 ist sichergestellt, dass der Zellstack 17 unter alleiniger Einwirkung der im Normalbetrieb des Batteriesystems 1 auftretenden Betriebslasten zuverlässig positions- und lagefest am Längsträger 5 gehalten ist, und zwar so, wie dies in der Figur 6 dargestellt ist.

Die Aufhängungseinheit 33 weist, um sich bei dem Seitencrash und unter Einwirkung der Crashkraft F definiert, plastisch zu verformen, hier lediglich beispielhaft einen ersten Solldeformationsbereich S1 und einen zweiten Solldeformationsbereich S2 auf. Der erste Solldeformationsbereich S1 ist durch den Anbindungsbereich des trägerseitigen Schenkels 51 an dem Längsträger 5 gebildet. Der zweite Solldeformationsbereich S2 ist durch den Anbindungsbereich des trägerseitigen Schenkels 51 an dem zellstackseitigen Schenkel 49 gebildet.

Bei dem Seitencrash unter der Einwirkung der Crashkraft F verformt sich die Aufhängungseinheit 33 nahezu ausschließlich in den Solldeformationsbereichen S1 und S2 plastisch und wird dadurch in den verformten Zustand der Aufhängungseinheit 33 überführt, wie er in der Figur 7 dargestellt ist. In dem verformten Zustand der Aufhängungseinheit 33 erstrecken sich der trägerseitige Schenkel und die trägerseitige Schenkelebene im Wesentlichen parallel zu einer von der Hochachse H und der Längsachse L aufgespannten Vertikalebene. Bei dem Seitencrash und unter der Einwirkung der Crashkraft F bewegt sich der Zellstack 17 somit in Richtung des Längsträgers 5, wodurch der trägerseitige Schenkel 51 in einer Klappbewegung an den Längsträger 5 anklappt. Durch das Ausführen der Klappbewegung wird die Bewegung des Zellstacks 17 durch die Aufhängungseinheit 33 geführt, und zwar derart, dass sich der Zellstack 17 definiert in Richtung des Längsträgers 5, vorzugsweise in Bezug auf den Längsträger 5 im Wesentlichen rein translatorisch, bewegt. Auch behält der Zellstack 17 bei dem Seitencrash seine Position und Lage parallel zur Hochachse H im Wesentlichen und parallel zur Längsachse L vollständig bei. Das heißt, dass sich der Zellstack 17 bei dem Seitencrash allenfalls geringfügig in negativer Hochachsenrichtung relativ zu dem Längsträger 5 verschiebt und sich weder in positiver, noch in negativer Längsachsenrichtung der Längsachse L verschiebt. Die Klebverbindung ist im Vergleich zur Aufhängungseinheit 33 derart dimensioniert und derart ausgelegt, dass die Klebverbindung bei der Verformung der Aufhängungseinheit 33 von dem unverformten Zustand in den verformten Zustand vollständig intakt bleibt.

Da auch die Aufhängungseinheiten 35, 37, 39, 41, 43, 45 und 47 auf die gleiche Weise funktionieren wie die Aufhängungseinheit 33, ergibt sich bei dem Seitencrash mit einem Pfahl 55 und unter der Einwirkung der Crashkraft F das in der Figur 4 dargestellte Deformationsverhalten des Batteriesystems 1. Das heißt, die Zellstacks 17, 19, 21 und 23 verschieben sich nahezu ausschließlich und definiert parallel zur der Querachse Q.

In den Figuren 8 bis 11 sind weitere Ausführungsformen des Batteriesystems 1 dargestellt, und zwar jeweils ausschnittsweise in einer Schnittansicht.

Bei einem in der Figur 8 dargestellten Batteriesystem 100 verläuft ein trägerseitiger Schenkel 101 nicht gerade, sondern weist eine Biegung 103 auf, die im Vergleich zu dem Batteriesystem 1 bei dem Seitencrash und unter der Einwirkung der Crashkraft F ein kontrolliertes Verformen des trägerseitigen Schenkels 101 zusätzlich begünstigt.

Bei einem in der Figur 9 dargestellten Batteriesystem 200 ist eine Seitenwandung eines Längsträgers 201 des Batteriesystems 200 nach innen gebogen. Zusätzlich bildet ein Teil der Seitenwandung einen trägerseitigen Schenkel 203 einer Aufhängungseinheit des Batteriesystems 200, die zusätzlich einen zellstackseitigen Schenkel 205 aufweist.

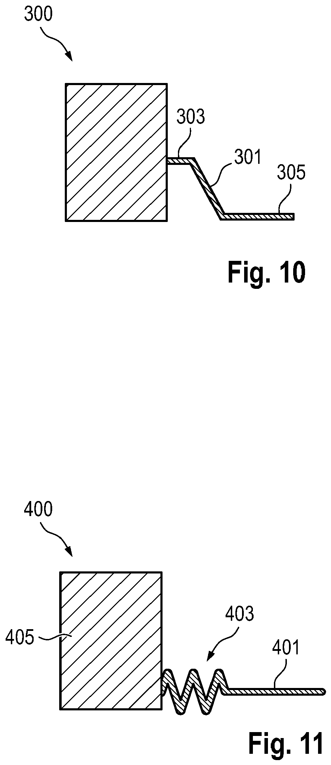

Bei einem in der Figur 10 dargestellten Batteriesystem 300 weist ein trägerseitiger Schenkel einer Aufhängungseinheit des Batteriesystems 300 einen zellstackseitigen Teilschenkel 301 und einen trägerseitigen Teilschenkel 303 auf. Der profilseitige Teilschenkel 303 erstreckt sich, im unverformten Zustand der Aufhängungseinheit, parallel zu einem zellstackseitigen Schenkel 305 der Aufhängungseinheit.

Bei einem in der Figur 11 dargestellten Batteriesystem 400 weist eine Aufhängungseinheit des Batteriesystems 400 einen zellstackseitigen Schenkel 401 und einen trägerseitigen Schenkel 403 auf. Der trägerseitige Schenkel 403 ist mehrfach gefaltet und weist mehrere Faltschenkel auf. Durch die Faltung oder die Faltschenkel des trägerseitigen Schenkels 403 ist der zellstackseitige Schenkel 401 in Richtung eines Längsträgers 405 des Batteriesystems 400 beweglich an dem Längsträger 405 befestigt.

### Bezugszeichenliste

- 1: Batteriesystem
- 3, 5, 7, 9, 11: Längsträger
- 13, 15: Querträger
- 17, 19, 21, 23: Zellstack
- 25: Deckel
- 27: Boden
- 29: Batteriezelle
- 31: Spannband
- 33, 35, 37, 39: erste Aufhängungseinheit
- 41, 43, 45, 47: zweite Aufhängungseinheit
- 49: zellstackseitiger Schenkel
- 51: trägerseitiger Schenkel
- 53: Klebstoffschicht
- 55: Pfahl
- 100: Batteriesystem
- 101: trägerseitiger Schenkel
- 103: Biegung
- 200: Batteriesystem
- 201: Längsträger
- 203: trägerseitiger Schenkel
- 205: zellstackseitiger Schenkel
- 300: Batteriesystem
- 301: zellstackseitiger Teilschenkel
- 303: trägerseitiger Teilschenkel
- 305: zellstackseitiger Schenkel
- 400: Batteriesystem
- 401: zellstackseitiger Schenkel
- 403: trägerseitiger Schenkel
- 405: Längsträger
- F: Crashkraft
- L: Längsachse
- Q: Querachse
- H: Hochachse
- S: Stapelachse
- S1: erster Solldeformationsbereich
- S2: zweiter Solldeformationsbereich

## Patentansprüche

1. Batteriesystem mit:
einem Zellstack (17), und
einem ersten Längsträger (5),
wobei der Zellstack (17) mit dem ersten Längsträger (5) verbunden ist, **dadurch gekennzeichnet, dass** das Batteriesystem (1) eine erste Aufhängungseinheit (33) aufweist, über die der Zellstack (17) mit dem ersten Längsträger (5) verbunden ist und die dazu geeignet ist und/oder dazu ausgebildet ist, sich bei einem Seitencrash und/oder unter Einwirkung einer Crashkraft (F) parallel zu einer Querachse (Q) des Batteriesystems (1) definiert zu verformen.

2. Batteriesystem nach Anspruch 1, **dadurch gekennzeichnet, dass** die erste Aufhängungseinheit (33) dazu geeignet ist und/oder dazu ausgebildet ist, sich bei dem Seitencrash und unter Einwirkung der Crashkraft (F) derart zu verformen, dass sich der Zellstack (17), vorzugsweise ausschließlich oder im Wesentlichen, entlang oder parallel zu der Querachse (Q) relativ zu und in Richtung des ersten Längsträgers (5) verschiebt.

3. Batteriesystem nach Anspruch 1 oder 2, **dadurch gekennzeichnet, dass** die erste Aufhängungseinheit (33) dazu geeignet ist und/oder dazu ausgebildet ist, sich bei dem Seitencrash und unter Einwirkung der Crashkraft (F) derart zu verformen, dass der Zellstack (17) seine Position und Lage, relativ zum ersten Längsträger (5), in einer Längsachsenrichtung (L) des Batteriesystems (1), vorzugsweise vollständig, beibehält, und/oder dass der Zellstack (17) seine Position und Lage, relativ zum ersten Längsträger (5), in einer Hochachsenrichtung (H) des Batteriesystems (1), vorzugsweise vollständig oder im Wesentlichen, beibehält.

4. Batteriesystem nach einem der vorhergehenden Ansprüche, **dadurch gekennzeichnet, dass** die erste Aufhängungseinheit (33) einen ersten Solldeformationsbereich (S1) und/oder einen zweiten Solldeformationsbereich (S2) aufweist, und dass die erste Aufhängungseinheit (33) dazu geeignet ist und/oder dazu ausgebildet ist, dass sich die erste Aufhängungseinheit (33) unter der Einwirkung der Crashkraft (F), vorzugsweise ausschließlich oder im Wesentlichen, im Bereich des ersten Solldeformationsbereiches (S1), bevorzugt plastisch, verformt, und/oder dass sich die erste Aufhängungseinheit (33) unter der Einwirkung der Crashkraft (F), vorzugsweise ausschließlich oder im Wesentlichen, im Bereich des zweiten Solldeformationsbereiches (S2), bevorzugt plastisch, verformt.

5. Batteriesystem nach Anspruch 4, **dadurch gekennzeichnet, dass** die erste Aufhängungseinheit (33) einen zellstackseitigen Schenkel (49) und einen trägerseitigen Schenkel (51) aufweist, wobei bevorzugt vorgesehen ist, dass der erste Solldeformationsbereich (S1) durch einen Anbindungsbereich gebildet ist, an dem der zellstackseitige Schenkel (49) in den trägerseitigen Schenkel (51) übergeht und/oder an diesem angebunden ist, und/oder dass der zweite Solldeformationsbereich (S2) der ersten Aufhängungseinheit (33) durch einen Anbindungsbereich gebildet ist, an dem der trägerseitige Schenkel (51) in den ersten Längsträger (5) übergeht und/oder an diesem angebunden ist.

6. Batteriesystem nach Anspruch 5, **dadurch gekennzeichnet, dass** sich der zellstackseitige Schenkel (49) in einer zellstackseitigen Schenkelebene erstreckt, die parallel zu einer Horizontalebene verläuft, die von der Querachse (Q) des Batteriesystems (1) und einer Längsachse (L) des Batteriesystems (1) aufgespannt wird, und/oder dass sich der trägerseitige Schenkel (51) ausgehend von dem zellstackseitigen Schenkel (49) in Hochachsenrichtung und in Richtung des ersten Längsträgers (5) schräg bis zum ersten Längsträger (5) erstreckt.

7. Batteriesystem nach Anspruch 5 oder 6, **dadurch gekennzeichnet, dass** der zellstackseitigen Schenkel (49) und der trägerseitigen Schenkel (51) materialeinheitlich und/oder einstückig miteinander verbunden sind, und/oder dass der trägerseitige Schenkel (51) zumindest teilweise durch den ersten Längsträger (5) gebildet ist, und/oder dass der erste Solldeformationsbereich (S1) durch den trägerseitigen Schenkel (51) gebildet ist.

8. Batteriesystem nach einem der vorhergehenden Ansprüche, **dadurch gekennzeichnet, dass** der Zellstack (17) in Klebverbindung mit der ersten Aufhängungseinheit (33), vorzugsweise mit einem zellstackseitigen Schenkel (49) der ersten Aufhängungseinheit (33) steht, wobei bevorzugt vorgesehen ist, dass die erste Aufhängungseinheit (33) und die Klebverbindung derart dimensioniert und/oder ausgelegt sind, dass die Klebverbindung bei einer Verformung der ersten Aufhängungseinheit (33), vorzugsweise vollständig, intakt bleibt.

9. Batteriesystem nach einem der vorhergehenden Ansprüche, **dadurch gekennzeichnet, dass** das Batteriesystem (1) eine zweite Aufhängungseinheit (41) aufweist, mittels der der Zellstack (17) mit einem zweiten Längsträger (11) des Batteriesystems (1) verbunden ist, wobei bevorzugt vorgesehen ist, dass die zweite Aufhängungseinheit (41) bau- und funktionsgleich mit der ersten Aufhängungseinheit (33) ist.

10. Fahrzeug mit einem Batteriesystem nach einem der vorhergehenden Ansprüche.
